# EUROPÄISCHE PATENTANMELDUNG

(11) **EP 1 638 052 A1**
(43) Veröffentlichungstag der Anmeldung: **22.03.2006**
(21) Anmeldenummer: 04022354.7
(22) Anmeldetag: 20.09.2004
(51) Int. Cl.: G07B 15/00, G07F 7/08

(54) **Elektronisches System mit Check In Vorgang und Raumüberwachung**

(71) Anmelder: Atron electronic GmbH, 85570 Markt Schwaben (DE)
(72) Erfinder: Gloger, Marcus, 81735 München (DE)
(74) Vertreter: Grünecker, Kinkeldey, Stockmair & Schwanhäusser Anwaltssozietät

(57) **Zusammenfassung**

Es wird ein verbessertes elektronisches Erfassungssystem sowie ein darin auszuführendes Verfahren vorgestellt. Das System umfasst mobile Einheiten, Einbuchungseinheiten und Erfassungseinheiten, wobei die mobilen Einheiten über eine abschaltbare kontaktlose Schnittstelle mit den Erfassungseinheiten kommunizieren und über eine zweite Schnittstelle mit den Einbuchungseinheiten. Durch einen Einbuchungsvorgang der mobilen Einheit an der Einbuchungseinheit wird die abschaltbare kontaktlose Schnittstelle der mobilen Einheit aktiviert. Eine mögliche Anwendung des Systems findet sich in einem Bezahlsystem für den Personenverkehr.

## Beschreibung

Die Erfindung bezieht sich allgemein auf ein Datenerfassungssystem und im Besonderen auf ein elektronisches System zur Anwesenheitskontrolle, wie es beispielsweise als Bezahlsystem im Personenverkehr Verwendung finden kann.

Der heutige Personenverkehr ist nach wie vor geprägt durch Papierfahrscheine, die sowohl auf Wertpapier als auch neuerdings bei Internetsystemen durch den Endkunden selbst auf normales Papier gedruckt werden. Die bisherige Bezahlung mit Bargeld wird zunehmend durch elektronische Bezahlmittel ergänzt. Teilweise bereits im Einsatz mit immer stärkerer Verbreitung sind elektronische Bezahlsysteme. Dabei wird auch auf den Fahrschein auf Basis eines Papierträgers verzichtet und die eigentlichen Daten des Fahrscheins auf elektronische Datenträger gespeichert. Die Nutzung von solchen elektronischen Fahrscheinsysteme haben unterschiedlichste Vorteile:
- Besserer Schutz gegen Betrug:
   - bessere Sicherung der Daten durch Verschlüsselung oder Signatur
   - automatisierbare und sicherere Kontrolle
   - wichtig insbesondere für höherwertige (Abonnementen-) Tickets
   - Blacklisting: gültige aber unbezahlte Fahrscheine (zum Beispiel AboSysteme mit monatl. Lastschrift) lassen sich mit Hilfe von Blacklisting im laufenden System erkennen und als ungültig markieren. Damit lassen sich unbezahlte Fahrscheine nachträglich ungültig machen.
- Geringere Zugangshürden für den Nutzer:
   - vereinfachte Kaufvorgänge, Kunden müssen keine Information über Tarifsystem oder Verkehrsnetz haben, sondem steigen "einfach" ein;
   - wenn der Datenträger auch eine Bezahlfunktion hat, muss der Kunde auch kein anderes Bezahlmittel bereithalten.
- Gerechtere Tarifierung:
   - durch eine sogenannte automatische Tarifierung muss sich der Kunde mit dem Tarifsystem gar nicht mehr auseinandersetzen. Entweder er erfasst Start und Ende seiner Fahrt, oder dies wird optimalerweise durch ein elektronisches Verfahren unterstützt;
   - damit lassen sich komplexere Tarife bilden, die zum einen die Tarifgerechtigkeit erhöhen, zum anderen aber auch die Möglichkeit erlauben, die "Ergiebigkeit" der Tarife zu verbessern;
   - bei Abo Kunden und "Post Paid" Verfahren lassen sich ähnlich wie im Mobilfunk "Lastschriftverfahren" auch für Einzelfahrscheine nutzen. Dem Kunden kann gegebenenfalls eine nachträgliche Bestprice-Berechnung angeboten werden.
- Optimierung durch Gewinnung von statistischen Daten:
   - durch elektronische Fahrscheinsysteme lassen sich einfacher qualifizierte Fahrgastströme für eine spätere Auswertung aufzeichnen;
   - damit kann der Einsatz von Betriebsmitteln bei gleichzeitig besserem Angebot optimiert werden;
   - individuelle Kunden sind ansprechbar und "beratbar" (CRM Daten);
   - die Einnahmenaufteilung zwischen verschiedenen Verkehrsleistung erbringenden Unternehmen kann gerechter erfolgen.

Die Vorteile solcher Systeme ließen sich noch weiter ausführen. Entsprechend wurden in der Vergangenheit unterschiedliche Lösungen entwickelt, die je nach konkreter Ausprägung weitere Vorteile bieten oder auch für den Kunden neue Einschränkungen.

Typische Lösungen in diesem Bereich basieren international auf sogenannten RF-ID Systemen. Besonders intensiv werden dabei derzeit Lösungen auf Basis von kontaktlosen Smart Cards (zum Beispiel ISO 14443 A und B, bekanntester Vertreter ist die "Mifare"-Familie der Firma Philips) diskutiert. Ist die Umsetzung solcher Lösungen innerhalb von sogenannten geschlossenen Systemen besonders einfach und naheliegend, ergeben sich bei "offenen" Systemen mannigfaltige Probleme.

Geschlossene Systeme sind solche, bei denen der Zugang zu den eigentlichen Transportmitteln durch ein Schrankensystem erfolgt. Der Fahrschein dient dabei üblicherweise auch zum Passieren der Schranken bei Betreten und Verlassen des Verkehrssystems. Derartige Systeme sind weltweit insbesondere in nichtdeutschen Metropolen umgesetzt. Im regionalen Verkehr wie auch bei allen Lösungen in Deutschland hat man jedoch ein offenes System realisiert, das ohne Passieren von Schranken oder ähnlichem die Nutzung der Verkehrsmittel erlaubt. Die Umwandlung von offenen Systemen in geschlossene ist weder politisch noch ökonomisch durchsetzbar.

Bei der Umsetzung von elektronischen Fahrscheinsystemen in einem geschlossenen System wird der elektronische Datenträger üblicherweise auch verwendet, um die Schranken zu Beginn und Ende der Reise zu betätigen. Damit ist es sehr einfach möglich, entsprechend den Kauf von Fahrscheinen mit diesen Vorgängen zu koppeln, so dass der Fahrgast zur Nutzung des elektronischen Fahrscheins keine weiteren Handlungen auf sich nehmen muss. Systeme, bei denen der Ein- und Ausstiegsvorgang mit einer solchen Handlung begleitet ist, werden Check In / Check Out (CiCo) Systeme genannt.

Da in offenen Systemen ggf. noch ein Check In darstellbar ist, stellt insbesondere der Check Out Vorgang Probleme dar. Schließlich ist unklar, welche Fahrstrecke zurückgelegt wurde, wenn der Check Out Vorgang vergessen wurde. Damit ist auch der korrekte Verkauf eines entsprechenden Fahrscheins nicht möglich. Zwangsmaßnahmen durch Anrechnung des teuersten Tickets in solchen Fällen ist weder kundenfreundlich noch durchsetzbar.

Andere Systeme gehen davon aus, dass bei einem intelligenten Check In Vorgang eine Zielwahl elektronisch auf Basis bereits früher gelöster Fahrscheine unterstützt wird, so dass bereits zu Beginn der Fahrt der Fahrpreis bekannt ist. Derartige Systeme realisieren bereits einen Großteil der skizzierten Vorteile, haben jedoch den wesentlichen Nachteil, dass die Check In Vorgänge deutlich verlängert und damit für stark frequentierte Haltestellen kaum sinnvoll sind.

Eine besondere Rolle spielen dabei die Abonnenten, die heute einen maximalen Komfort genießen, da sie Ihren Fahrschein lediglich zur Kontrolle vorlegen und weder beim Einstiegsvorgang noch beim Aussteigen besondere Prozeduren berücksichtigen müssen. Nachteilig ist dabei aber insbesondere, dass die realen Fahrgastströme nicht bekannt sind und der Fahrgast auch nicht gerechter nutzungsabhängig tarifiert werden kann. Gerade bei Abo Fahrscheinen wird jedoch vermehrt auf elektronische Fahrscheine umgestiegen, da in diesen Bereich ca. 80 % aller Fahrscheine überhaupt fallen und zum anderen die Fahrscheine besonders hochpreisig sind und damit ein Betrug besonders lohnenswert ist. Neben der höheren Fälschungssicherheit geht man dabei auch vermehrt zu einem kontrollierten Einstieg über, der eine qualifizierte Kontrolle (linien- und zeitbezogen) ermöglicht. Der Fahrgast muss dann aber zumindest einen Check In Vorgang durchführen (Abo Ci).

Entsprechende Systeme wurden weltweit entwickelt, umgesetzt und teilweise standardisiert. Typische Beispiele hierfür sind:
- VDV Kernapplikation (Verband Deutscher Verkehrsuntemehmen)
- Umsetzung VRR / VRS (Verkehrsverbund Rhein Ruhr und Rhein Sieg)
- Oyster Card in London
- der ITSO Standard
- Die "Travelcard" in skandinavischen Ländern
- der Calypso Industrie-Standard
- DF_Fahrschein auf der Geldkarte
- u.v.m.
   Die Einschränkungen des Komforts für den Fahrgast motivierten zu alternativen Lösungen, wie zum Beispiel der Raumüberwachung. Die Grundidee der Raumüberwachung basiert auf einer mobilen Sende- / Lese-Einheit, die über Hochfrequenzkommunikation abgefragt werden kann und ohne Zutun des Fahrgastes dessen Anwesenheit in den Fahrzeugen erkennt. Diese kann entweder für eine nachträgliche Bewertung aufgezeichnet werden, oder es wird über einen auf der Einheit integrierten Werteinheitenspeicher dynamisch während der Fahrt ein entsprechender Fahrschein tarifiert und abrechnet. Dieses System wird einschlägig als Be In Be Out (BiBo) oder als Raumüberwachung bezeichnet.

Entsprechende Lösungen wurden vor allem in der Schweiz im Rahmen des Easy Ride Projekts der SBB (Schweizerische Bundes Bahn) für ein entsprechendes landesweites System untersucht und in einem Feldversuch realisiert. Dabei kamen zwei unterschiedliche Systeme zum Einsatz. Das System der Siemens TTS (Traffic Telematic Systems) wird dabei im Rahmen des Intermobil-Projektes in Dresden für einen weiteren Feldversuch vorbereitet.

Die wesentliche Problematik in der Realisierung eines solchen Systemes liegt dabei vor allem in der Stromversorgung. Da es nach heutigem Stand der Technik nicht möglich ist, bei vertretbaren Feldstärken passive Empfangs- / Leseeinheiten zu verwenden, ist man auf aktive Lösungen angewiesen, die durch einen Energiespeicher (typischerweise eine Batterie) gespeist werden. Da bei typischer Nutzung durch den Fahrgast eine längere Betriebszeit (größer 2 Jahre) gefordert ist, sind alle Lösungen mit Hilfe zweier getrennter HF (Hochfrequenz)-Systeme aufgebaut. Dabei wird ein HF-System in den ISM Bändern 434MHz bzw. 868MHz für die eigentliche Kommunikation in der Phase der Raumüberwachung verwendet. Da diese Systeme relativ viel Strom verbrauchen, wird ein zweites niederfrequentes HF-System im Bereich 125kHz bzw. im 13MHz-Bereich verwendet. Diese HF-Systeme haben dabei einen sehr geringen Stromverbrauch und besitzen ausschließlich eine Weckfunktion. Im Wesentlichen wird hierzu im Eingangsbereich der Fahrzeuge ein "Wecksender" realisiert, der vor allem durch die magnetische HF Komponente die mobile Einheit des Fahrgastes aufweckt und dann den Aufbau einer Kommunikation auf dem höherfrequenten HF System auslöst.

Problematisch bei diesen Systemen ist jedoch, dass auch in der Ruhephase Strom verbraucht wird, der zwar sehr gering ist, aber dennoch auf Dauer mehr als 50% der Energie aufbraucht. Zum zweiten gibt es Probleme in der praktischen Nutzung:
- Der Fahrgast führt beim Einsteigen keine "juristische" Willenserklärung aus. Er ist zwar verpflichtet, sich von der Funktion des Systems durch Prüfen einer Anzeige auf der mobilen Einheit zu überzeugen, muss aber keine entsprechende Zwangshandlung durchführen.
- Fahrgäste, die zum Beispiel in einer Fußgängerzone parallel zu Straßenbahnstrecken laufen, können ohne Ihr Zutun durch das BiBo System erfasst werden und "scheinen" mit den Fahrzeugen mitgefahren zu sein ohne dass dies für den Fahrgast erkennbar gewesen wäre.
- Hat ein Fahrgast weitere mobile Systeme von beispielsweise anderen Familienmitgliedem bei sich und nutzt das Verkehrssystem, werden automatisch mehrere Fahrscheine gelöst, die eigentlich nicht benötigt werden.
- Im Falle eines Defektes an der mobilen Einheit des Fahrgastes muss der Fahrgast seine Fahrt unterbrechen, da damit kein gültiger Fahrschein mehr gelöst werden kann und es keine systemimmanente Rückfallebene gibt.
   Dennoch wird das BiBo System von Siemens TTS weiterverfolgt und wurde entsprechend im Rahmen der VDV-Kernapplikation als Standard beschrieben. Weitere Ansätze gehen in Richtung Integration mit dem Handy, um den dort vorhandenen Energiespeicher sowie zum Beispiel integrierte Funkschnittstellen auf Basis von Bluetooth zu nutzen. Entsprechende Lösungen sind aber noch nicht weiter verfolgt und umgesetzt worden.

Es ist eine Aufgabe der vorliegenden Erfindung, ein verbessertes elektronisches Erfassungssystem zu schaffen, das zur elektronischen Fahrpreisberechnung und -bezahlung benutzt werden kann und bei maximaler Benutzerfreundlichkeit gleichzeitig über eine erhöhte Zuverlässigkeit und Fälschungssicherheit verfügt sowie das Serviceintervall der mobilen Einheit durch niedrigen Energiebedarf verlängert.

Die vorliegende Aufgabe wird erfindungsgemäß dadurch gelöst, dass Check In und Raumüberwachung kombiniert werden, so dass die beschriebenen Nachteile umgangen werden. Der Weckempfänger in der mobilen Einheit wird dabei durch eine zweite Datenkommunikations-Schnittstelle ersetzt, welche üblicherweise auch bei Check In Verfahren zum Einsatz kommt. Der Fahrgast muss dabei zur Aktivierung seines Fahrscheines und als Willenserklärung hierzu an einem Terminal im Einstiegsbereich des Fahrzeuges sein mobiles System aktivieren und wird dann durch die erste Datenkommunikations-Schnittstelle, die als HF-System realisiert ist, im Rahmen der Raumüberwachung erfasst. Ein solches System wird im Weiteren als Check In Be Out (CiBo) bezeichnet.

Das CiBo-System vereinigt die wichtigsten Vorteile des oben beschriebenen CiCo-Systems mit den wichtigsten Vorteilen des BiBo-Systems. Ein besonderer Vorteil eines CiBo-Systems besteht darin, dass durch die räumliche Nähe eines Check In Vorgangs für das Wecken keine aktiven Funktionen mehr in der mobilen Einheit benötigt werden. Die mobile Einheit kann völlig ausgeschaltet bleiben, bis durch den bevorzugt passiv ausgeführten Check In Vorgang die kontaktlose Datenübertragungs-Scnittstelle für die Raumüberwachung in Gang gesetzt wird. Durch den bewusst ausgeführten Check In Vorgang wird sowohl eine ungewollte Belastung des Kunden als auch ein Betrug durch Manipulation seitens des Kunden vermieden.

Die Idee der Erfindung sowie vorteilhafte Ausgestaltungen werden im Folgenden unter Bezug auf die Figuren beschrieben. Die Erfindung wird dabei am Beispiel eines Personenverkehrssystems beschrieben. Sie könnte jedoch auch vorteilhaft zur Anwesenheitsüberwachung in Sicherheitsbereichen sowie für Mautsysteme sinngemäß Anwendung finden.
- Fig. 1: zeigt eine beispielhafte Struktur eines erfindungsgemäßen Erfassungssystems gezeigten Erfassungsvorganges.
- Fig. 2: zeigt ein Blockschaltbild einer mobilen Einheit des erfindungsgemäßen Systems.
- Fig. 3: zeigt ein Blockschaltbild einer Erfassungseinheit des erfindungsgemäßen Systems.
- Fig. 4: zeigt ein Blockschaltbild einer Einbuchungseinheit des erfindungsgemäßen Systems.
- Fig. 5: zeigt ein Blockschaltbild einer optionalen Kontrolleinheit des erfindungsgemäßen Systems.
- Fig. 6: zeigt einen beispielhaften Ablauf eines Erfassungsvorganges.
- Fig. 7: llustriert den Datenaustausch zwischen verschiedenen Einheiten während des in Fig. 2

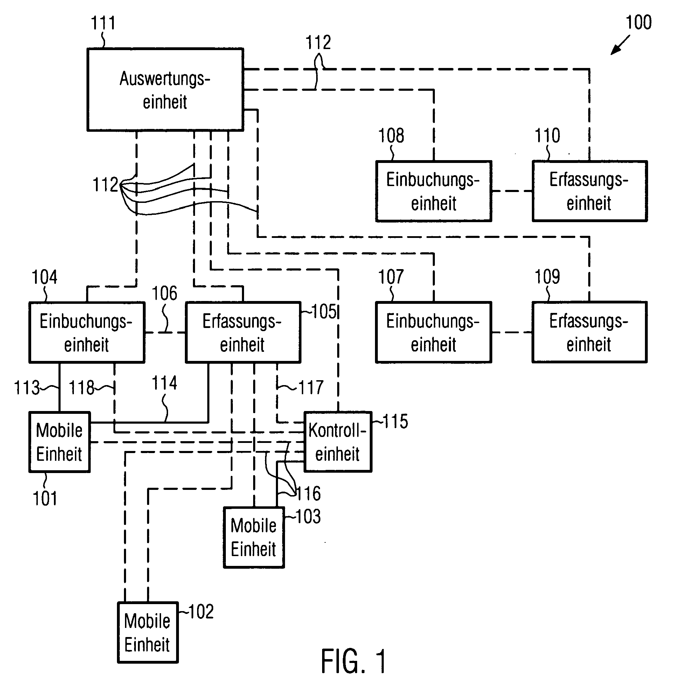

Das System 100 umfasst, wie in Fig. 1 gezeigt, eine oder mehrere mobile Einheiten 101-103, eine Einbuchungseinheit 104 für Check In und gegebenenfalls auch Check Out sowie eine im Fahrzeug fest installierte Erfassungseinheit 105 für die Raumüberwachung. Einbuchungseinheit 104 und Erfassungseinheit 105 können mit einer Datenübertragungsschnittstelle 106 verbunden sein oder sogar in einem Gerät zusammengefasst werden. Es ist aber auch möglich, dass Einbuchungseinheit 104 an einer Haltestelle, an einem Bahnhofszugang oder auf einem Bahnsteig installiert ist und Erfassungseinheit 105 in einem Fahrzeug. Das System kann auch weitere Einbuchungseinheiten 107, 108 und weitere Erfassungseinheiten 109, 110 umfassen.

Zwischen einer mobilen Einheit 101 und einer Einbuchungseinheit 104 können für einen Einbuchungsvorgang (Check In) oder Ausbuchungsvorgang (Check Out) Daten über eine Datenkommunikationsverbindung 113 ausgetauscht werden. Datenkomminikationsverbindung 113 kann über elektrische Kontakte oder über eine kontaktlose Verbindung kurzer Reichweite realisiert werden. Dadurch ist sichergestellt, dass diese Vorgänge durch eine bewusste Handlung des Benutzers vorgenommen werden. Um das System gegen Betrug zu schützen, werden typischerweise Verschlüsselung, Authentifizierung und ähnliche Methoden eingesetzt um die Kommunikation und die Manipulation von Kartendaten zu sichern. Bei einem Ein- oder Ausbuchungsvorgang kann beispielsweise eine der mobilen Einheit 101 zugewiesene Kennung an die Einbuchungseinheit 104 übertragen werden. Im Gegenzug könnte die mobile Einheit 101 Daten über Uhrzeit, Linie und Haltestelle erhalten. Ein Ausbuchungsvorgang könnte mit einer Belastung eines auf der mobilen Einheit gespeicherten Guthabenkontos verbunden sein, gemäß dem Fahrpreis für die zurückgelegte Strecke.

Eine weitere besondere Ausprägung des Systems ist dadurch gekennzeichnet, dass für die Weckfunktion und Nahfeldkommunikation ein bereits standardisiertes Verfahren verwendet wird. Damit ist es möglich, in Bereichen, wo noch keine Raumüberwachung vorhanden ist, übliche Karten für CiCo Systeme zu simulieren und zum einen eine sukzessive Migration zu dem beschriebenen System zu ermöglichen als auch Fahrgästen zu erlauben, mit der beschriebenen mobilen Einheit andere übliche benachbarte CiCo Systeme zum Beispiel in anderen Verkehrsgebieten zu nutzen.

Eine bevorzugte Ausprägung des Systems ist dabei die Verwendung der in ISO14443 beschriebenen Nahfeldkommunikation, insbesondere im Rahmen der unter "Mifare" bekannten Verfahren.

Zwischen der mobilen Einheit 101 und der Erfassungseinheit 105 besteht eine kontaktlose Datenkommunikationsverbindung 114 beispielsweise zur Raumüberwachung in Fahrzeugen. Die entsprechende Schnittstelle in der mobilen Einheit 101 kann durch einen Einbuchungsvorgang in Betrieb gesetzt und durch einen eventuellen Ausbuchungsvorgang wieder deaktiviert werden. Bei einem Erfassungsvorgang sendet beispielsweise die mobile Einheit 101 ihre Kennung an die Erfassungseinheit 105 und empfängt im Gegenzug Daten über Zeit, Linie, Haltestelle oder eine Guthabenbelastung.

Alternativ kann der Einbuchungsvorgang statt über die Einbuchungseinheit 104 auch über die Erfassungseinheit 105 ausgeführt werden. In diesem Fall ist die mobile Einheit 101 vorteilhaft mit einem Bedienelement ausgestattet, durch dessen Betätigung der Benutzer (Fahrgast) den Einbuchungsvorgang bewusst startet.

Zur Durchführung einer Fahrscheinkontrolle während der Fahrt kann das System auch über eine oder mehrere Kontrolleinheiten 115 verfügen, die über Datenkommunikationsverbindungen 116 mit den mobilen Einheiten 101-103 kommunizieren können. Verbindung 116 ist dabei kompatibel zur Verbindung 113. Je nach Ausbildung des Systems kann sie über Kontakte oder über eine kontaktlose Übertragung kurzer Reichweite hergestellt werden. Dabei kann die Kontrolleinheit 115 von der mobilen Einheit 101 die Übertragung von deren Kennung und eventuell von fahrscheinrelevanten Daten wie Linie, Einstiegshaltestelle und Uhrzeit des Einstiegs abfragen, um prüfen zu können, ob die mobile Einheit 101 vorschriftsmäßig in das System 100 eingebucht ist. Weitere Datenverbindungen können zur Einbuchungseinheit 104, zur Erfassungseinheit 105 und zur Auswertungseinheit 111 bestehen. Beispielsweise kann die Kontrolleinheit 115 die von der mobilen Einheit empfangenen Daten zum Zwecke eines Vergleichs mit dort gespeicherten Daten an eine Erfassungseinheit 105 übertragen.

Für eine vorteilhafte Ausprägung des Systems kann in einem besonderen "Razzia"-Modus zentral die Möglichkeit, einen Check In Vorgang an einem Check In Terminal 104 oder über die Raumüberwachung (PiBo) durch Erfassungseinheit 105 durchzuführen, ausgeschaltet werden. Dadurch kann bei einer "Fahrscheinkontrolle" verhindert werden, dass Fahrgäste nachträglich einen Check In Vorgang auslösen, um sich in Besitz einer gültigen Fahrerlaubnis zu bringen. Dieser Razzia-Modus kann beispielsweise von Kontrolleinheit 115 aus über die Schnittstellen 117 und / oder 118 aktiviert werden.

Entsprechende Teilsysteme 104, 105, 107-110 und 115 werden über Datenleitungen 112 mit einer zentralen Auswertungseinheit 111 zu einem Gesamtsystem verbunden. Die Datenleitungen 112 können bei stationären Geräten fest verdrahtet sein, oder, besonders bei Geräten in Fahrzeugen, über Funkverbindung wie z.B. mit einem Mobiltelefonnetz realisiert werden. Die Auswertungseinheit 111 kann beispielsweise an die Erfassungseinheiten 105, 109, 110 oder Einbuchungseinheiten 104, 107, 108 Tarifinformationen über Fahrpreise oder Blacklists von gesperrten mobilen Einheiten liefern. Im Gegenzug kann die Auswertungseinheit 111 erfasste kundenbezogene (d.h. mit einer Kennung versehene) Zeit- und Wegeinformation von den Einheiten 104, 105, 107, 108, 109, 110 empfangen und für eine Rechnungsstellung ("post paid") oder für Planung oder Steuerung des Betriebsablaufes auswerten. Auswertungseinheit 111 kann auch die Check In Be Out Daten zentral sammeln und auf Plausibilität prüfen. In einem derartigen System können die primären Sicherungsmaßnahmen kleiner ausfallen, da ein Betrugsversuch schnell erkannt und dann darauf reagiert werden kann.

Zur Steuerung des Betriebsablaufes kann beispielsweise festgestellt werden, wie viele Personen sich in einem Fahrzeug befinden, um gegebenenfalls zusätzliche Fahrzeuge einzusetzen. In einem Rufbus-System könnten an einer Haltestelle fest installierte Einbuchungseinheiten bei Bedarf einen Bus zu dieser Haltestelle rufen. Zur Planung des Betriebsablaufes könnten langfristig statistische Auswertungen über die zurückgelegten Wege in die Linienplanung mit einbezogen werden.

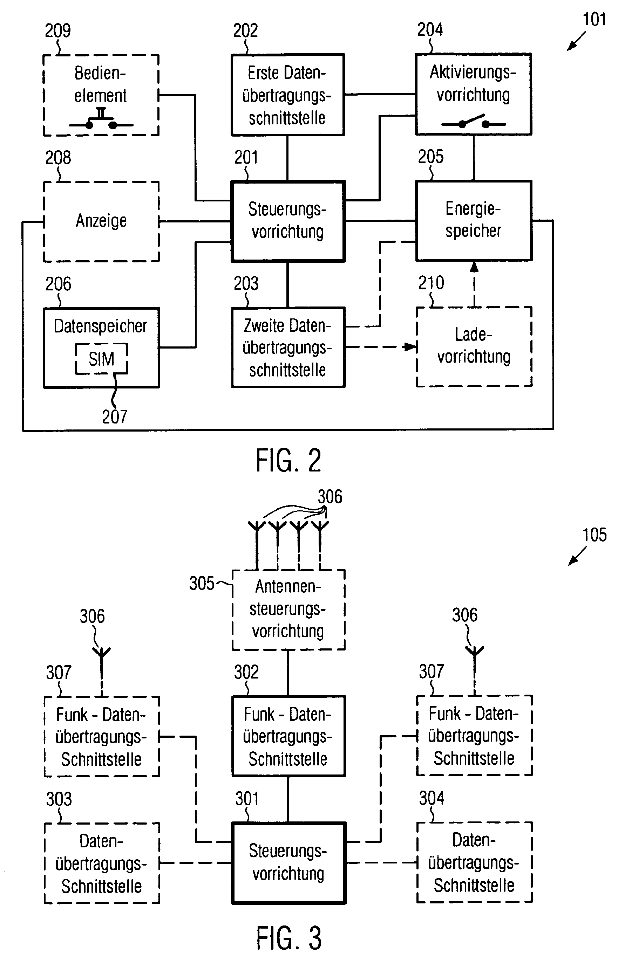

Fig. 2 zeigt ein Blockschaltbild einer mobilen Einheit 101. Sie umfasst eine Steuerungsvorrichtung 201, die andere Komponenten steuert und Daten zum Austausch über die Schnittstellen 202 und 203 verwaltet. Eine erste Datenübertragungsschnittstelle 202 dient dem Datenaustausch mit Erfassungseinheiten 105, 109 und 110 über Funkverbindung. Sie kann, gesteuert von Steuerungsvorrichtung 201, über die Aktivierungsvorrichtung 204 ein- und ausgeschaltet werden, so dass sie im ausgeschalteten Zustand keine Energie aus dem Energiespeicher 205 entnimmt.

Schnittstelle 202 kann für eine Datenübertragung auf 2.4 GHz mit 1 Mbit Datenübertragungsrate ausgelegt sein. Dies besitzt gegenüber niederfrequenteren Lösungen auf Basis 433MHz und 868MHz mit geringeren Datenübertragungsraten den Vorteil, dass der Stromverbrauch solcher Empfänger und Sender zwar etwas höher ist, die Übertragungszeit aber viel geringer und damit der Gesamtstromverbrauch deutlich geringer. Zudem kann die Anzahl der anprechbaren mobilen Einheiten z.B. in einem Zeitmultiplexverfahren durch die höhere Gesamtbandbreite gesteigert werden.

Die zweite Datenübertragungs-Schnittstelle 203 dient dem Datenaustausch mit Einbuchungseinheit 105, 107 oder 108. Sie ist entweder mit Kontakten oder kontaktlos mit kurzer Reichweite. Auch sie benötigt im Ruhezustand keinen Strom, kann aber aus der Erfassungseinheit 105, 107 oder 108 mit Energie versorgt werden, so dass sie von dieser jederzeit aktivierbar ist.

Eine besondere Ausprägung der mobilen Einheit 101 besteht darin, dass in der nicht aktiven Phase überhaupt keine Energie für das Aufrechterhalten der Weckfunktion benötigt wird. Bevorzugt wird eine solche Funktion derart realisiert, dass zunächst ein in Schnittstelle 203 enthaltener passiver Schwingkreis auf das Weckfeld reagiert und eine Selbsthaltefunktion für die interne Stromversorgung aktiviert. Das Wecksystem wird dann als Kommunikationssystem verwendet, um festzustellen, ob eine Raumüberwachung überhaupt möglich ist. Erst nach Austausch ggf. weiterer Daten wird das Raumüberwachungssystem aktiv geschaltet. Ansonsten geht die mobile Einheit wieder in einen vollständig stromlosen Zustand.

Die mobile Einheit 101 kann auch so ausgeführt sein, dass bei leerem Energiespeicher 205, wenn dadurch keine Raumüberwachung mehr möglich ist, das komplette mobile System 101 wie bei einer passiven Karte üblich über Schnittstelle 203 mit Energie versorgt wird und über dieses System dann eine Kommunikation stattfinden kann. Als Rückfall kann dann das System als normales CiCo System verwendet werden.

Weiterhin kann die mobile Einheit 101 so ausgebildet sein, dass auch der Energiespeicher 205 mit der Energie, die durch Schnittstelle 203 von einer Erfassungseinheit 105, 109, 110 zugeführt wird, nachgeladen werden kann. Damit wird zumindest ein Teil der für die Raumüberwachung notwendigen Energie übertragen und somit die Lebensdauer des Energiespeichers verlängert. Zu diesem Zweck verfügt die mobile Einheit 101 dann über eine Ladevorrichtung 210, die während eines Datenaustausches Energie über die zweite Schnittstelle 203 empfängt und damit den Energiespeicher 205 nachlädt. Wenn das System 100 über ein erweitertes Informationsterminal verfügt, bei dem der Kunde Informationen beziehen, seine Karte verlängem oder den Werteinheitenspeicher aufladen kann, so kann auch diese Zeit zum Nachladen des Energiespeichers genutzt werden.

Die mobile Einheit umfasst weiterhin einen Datenspeicher 206, der zumindest eine individuelle Kennung der mobilen Einheit speichem kann. Der Speicherplatz für diese Kennung kann auf einer separierbaren SIM-Karte 207 vorgesehen sein. Datenspeicher 206 kann ferner optional Kundendaten, Fahrscheindaten wie Uhrzeit, Linie und Haltestellen und / oder einen Werteinheitenspeicher für eine Guthabenfunktion beinhalten.

Die mobile Einheit kann ferner mit einem Anzeigelement 208 (einfaches "binäres" Anzeigelement wie LED bzw. komplexere Anzeigen wie zum Beispiel alphanumerisches LCD) zum Anzeigen der korrekten Funktion der Karte ausgestattet sein. Damit können auch dynamische Zusatzinformationen während der Fahrt übertragen werden.

Die mobile Einheit 101 kann ferner ein Bedienelement für einen manuellen Check In besitzen. Dabei erfolgt der Check In durch das Raumüberwachungssystem der Erfassungseinheit 105, 109 oder 110 anstatt über eine Einbuchungseinheit 104, 107 oder 108. Eine solche Ausprägung des Systems kann auch als Personal In Be Out (PiBo) bezeichnet werden, da der Fahrgast die mobile Einheit 101 als persönliches Check In Terminal verwendet. Der besondere Vorteil für den Fahrgast besteht darin, dass er zuerst einen Sitzplatz einnehmen kann um dann in aller Ruhe einzuchecken. Sollte der Check In Vorgang dabei fehlschlagen, kann dieser immer noch am normalen Check In Terminal 104 nachgeholt werden. Eine mobile Einheit für PiBo besitzt bevorzugt ein erweitertes Anzeigelement 208, so dass der Fahrgast wie beim Check In Terminal weitere Informationen erhalten kann.

Fig. 3 zeigt ein Blockschaltbild einer Erfassungseinheit 105, 109, 110. Sie besitzt eine Steuerungsvorrichtung 301, üblicherweise mit einem oder mehreren Prozessoren, die die anderen Komponenten programmierbar steuern und die erfindungsgemäßen Verfahren mit Hilfe von Programm-Code ausführen. Des Weiteren besitzt sie eine erste Übertragungsschnittstelle 302 zur Kommunikation mit Schnittstelle 202 von mobilen Einheiten 101-103 über Funk-Datenverbindung 114.

Schnittstelle 302 kann vorteilhaft mit einer Antenna Diversity, bestehend aus Antennensteuerungsvorrichtung 305 und mehreren Antennen 306, versehen werden. Die Antennen können dabei als "Girlande" mit kleinen stationären Sende-/Empfangseinheiten in geringem Abstand (alle 2-3m) für die Deckenmontage angeordnet werden. Dadurch kann eine sichere Erkennung auch unter ungünstigen Empfangsbedingungen sichergestellt werden (starke Dämpfung durch große Anzahl von Personen im Fahrzeug, ggf. zusätzliche Dämpfung durch "nasse" Mäntel, Multipathfading in Fahrzeugen - metallischer Käfig). Die Antenne können vorteilhaft als Patchantennen ausgeführt werden, um die maximale Nutzsignalausnutzung im Fahrgastraum des Fahrzeuges bei sehr geringer Bauhöhe zu erreichen. Alternativ kann jede dieser Antennen über eine eigene Schnittstellen-Elektronik 307 verfügen.

Im letzteren Fall ist es möglich, dass alle Empfangseinheiten 302, 307 die Signale der mobilen Einheiten 101-103 gleichzeitig empfangen. Dabei wird für jede mobile Einheit die Empfangseinheit mit der besten Kommunikationsverbindung ermittelt. Die Aussendungen erfolgen dann dynamisch über diese Empfangseinheit.

Optional kann eine Erfassungseinheit 105 auch eine Schnittstelle 303 zur Kommunikation mit einer Einbuchungseinheit 104 über Datenverbindung 106 und eine Schnittstelle 304 zur Kommunikation mit einer Auswertungseinheit 111 über eine Datenverbindung 112 besitzen.

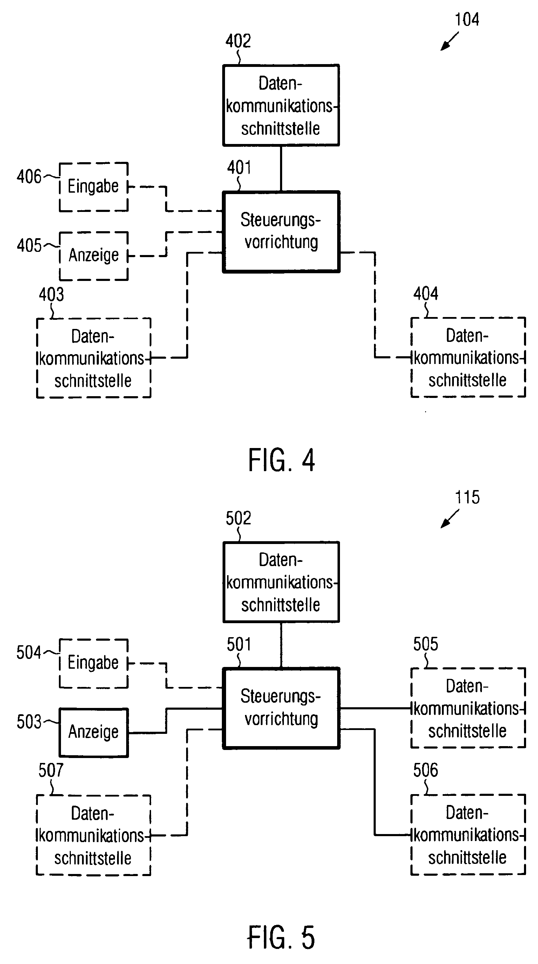

Fig. 4 zeigt ein Blockschaltbild einer Einbuchungseinheit 104. Sie besitzt eine Steuerungsvorrichtung 401, üblicherweise mit einem oder mehreren Prozessoren, die die anderen Komponenten programmierbar steuern und die erfindungsgemäßen Verfahren mit Hilfe von Programm-Code ausführen. Des weiteren besitzt sie eine Übertragungsschnittstelle 302 zur Kommunikation mit Schnittstelle 203 von mobilen Einheiten 101-103 über Datenverbindung 113.

Optional kann eine Einbuchungseinheit 104 auch eine Schnittstelle 403 zur Kommunikation mit einer Erfassungseinheit 105 über Datenverbindung 106 und eine Schnittstelle 404 zur Kommunikation mit einer Auswertungseinheit 111 über eine Datenverbindung 112 besitzen.

In einer weiteren besonderen Ausprägung des Systems besitzt Einbuchungseinheit 104 auch eine Anzeigevorrichtung 405. Dadurch können beispielsweise während des Check In Vorgangs auf dem Check In Terminal (Einbuchungseinheit 104) weitere Kundendaten oder allgemeine oder spezifische Kundeninformationen angezeigt werden.

Ferner kann Einbuchungseinheit 104 auch eine Eingabevorrichtung 406 besitzen, so dass während des Check In Vorgangs auf dem Check In Terminal (Einbuchungseinheit 104) der Fahrgast weitere Funktionen für seine Fahrt im dahinterliegenden System 100 auslösen kann. Dies kann beispielsweise ein Fahrtzielwunsch sein, so dass im Hintergrund in einer zentralen Einheit 111 automatisch Anschlüsse zu anderen Fahrzeugen sichergestellt werden.

Fig. 5 zeigt ein Blockschaltbild einer Kontrolleinheit 115. Sie besitzt eine Steuerungsvorrichtung 401, üblicherweise mit einem oder mehreren Prozessoren, die die anderen Komponenten programmierbar steuern und die erfindungsgemäßen Verfahren mit Hilfe von Programm-Code ausführen. Des Weiteren besitzt sie eine Übertragungsschnittstelle 502 zur Kommunikation mit Schnittstelle 202 von mobilen Einheiten 101-103 über Datenverbindung 116.

Kontrolleinheit 115 besitzt eine Anzeigeeinheit, die dem Kontrolleur Informationen z.B. über die ordnungsgemäße Einbuchung einer mobilen Einheit 101-103 in das System 100 ("gültige Fahrkarte", "gültige Fahrerlaubnis") anzeigt. Optional kann auch eine Eingabeeinheit zur Steuerung von Funktionen der Kontrolleinheit vorhanden sein.

Optional kann eine Kontrolleinheit 115 auch eine Schnittstelle 505 zur Kommunikation mit einer Erfassungseinheit 105 über Datenverbindung 117, eine Schnittstelle 506 zur Kommunikation mit einer Einbuchungseinheit 104 über Datenverbindung 118 und eine Schnittstelle 404 zur Kommunikation mit einer Auswertungseinheit 111 über eine Datenverbindung 112 besitzen. Über Datenverbindungen 117 und/oder 118 kann beispielsweise der oben beschriebene "Razzia"-Modus durch den Kontrolleur vor Beginn einer Kontrolle aktiviert werden.

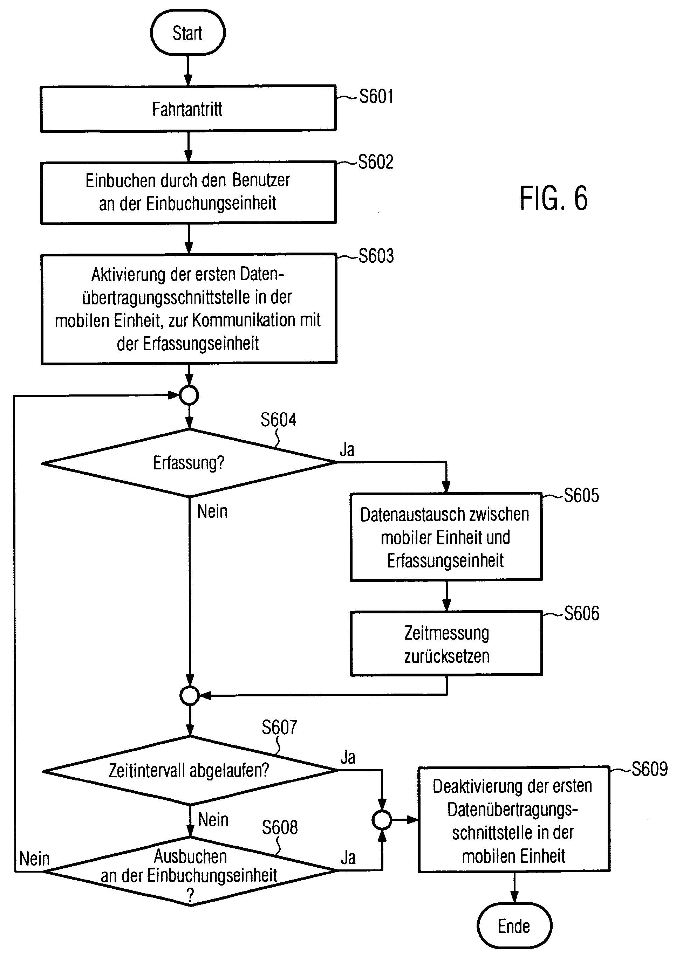

Fig. 6 zeigt einen beispielhaften Ablauf, wie er in einem System nach Fig. 1 vorkommen kann.

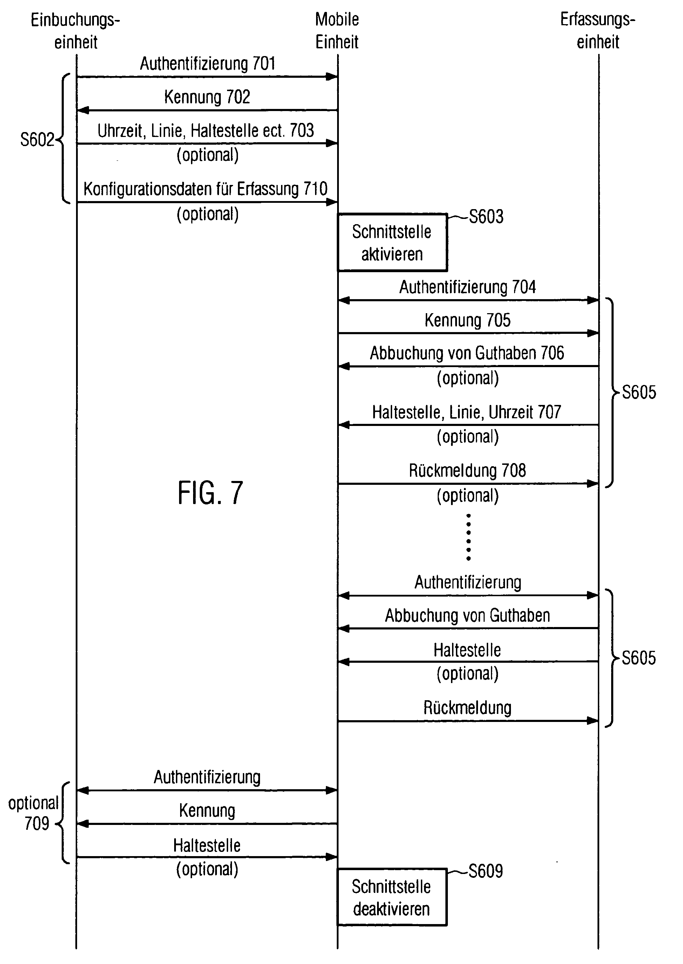

Fig. 7 zeigt den dazu ablaufenden Datenaustausch zwischen den Einheiten.

In S601 besteigt ein Benutzer beispielsweise ein Fahrzeug eines Personenverkehrssystems. Er begibt sich zur Einbuchungseinheit 104, um sich in S602 mit seiner mobilen Einheit 101 in das System 100 einzubuchen. Dies kann durch Einstecken der mobilen Einheit 101 in einen Schacht an der Einbuchungseinheit 104 geschehen oder, bevorzugt, bei einer kontaktlosen Datenkommunikationsverbindung 113 dadurch, dass der Benutzer die mobile Einheit 101 in die Nähe einer gekennzeichneten Fläche auf der Einbuchungseinheit 104 hält. Wie in Fig. 7 dargestellt, können dabei über die Verbindung 113 Authentifizierungsdaten 701, die Kennung der mobilen Einheit 702 und optional Informationen über Uhrzeit, Linie und Haltestelle 703 ausgetauscht werden.

Schritte S601 und S602 können auch vertauscht ausgeführt werden, z.B. wenn Einbuchungseinheit 104 an einer Haltestelle oder auf einem Bahnsteig fest installiert ist. Sie könne auch mehr oder weniger gleichzeitig statt finden.

Während des Check In Vorgangs S602 könne auch fahrscheinrelevante Daten zwischen mobiler Einheit 101 und Einbuchungseinheit 104 ausgetauscht werden, so dass bei Ausfall der Raumüberwachung Mindestdaten als Rückfall vorhanden sind. Zum anderen können Paramter der von Erfassungseinheit 105 durchgeführten Raumüberwachung ausgetauscht werden, die zum Beispiel einen besonders stromsparenden Betrieb ermöglichen. Beispielsweise kann die Kanalwahl oder die Zuordnung zu einem Zeitschlitzverfahren für die Kommunikation vereinfacht werden. Bei einer existierenden Vielzahl von Kanälen (ca. 80) und Zeitschlitzen würde ein Suchvorgang (Scan) nach dem ausgesendeten Signal der Erfassungseinheit 105 in der mobilen Einheit 101 unzulässig viel Zeit und Energie benötigen.

Weiter können der mobilen Einheit 101 während der Kommunikation mit den festen Einheiten 105, 109, 110 oder dem Check in Terminal 104 Parameter übergeben werden, die das Raumüberwachungssystem der benachbarten Wagen beschreiben, so dass ein besonders energiesparendes oder sonstwie optimiertes Wechseln von einem Teilsystem mit Raumüberwachung in ein anderes möglich ist, ohne dass eine neuerlicher Check In Vorgang nötig wird.

Durch das Einbuchen wird auch Schritt S603 ausgelöst, der in der mobilen Einheit 101 die erste Datenkommunikations-Schnittstelle 202 zur Kommunikation mit Erfassungseinheit 105 aktiviert.

In Schritt S604 prüft die Steuerungsvorrichtung 201, ob die erste Datenübertragungsschnittstelle 202 über die Datenkommunikationsverbindung 114 von Erfassungseinheit 105 eine Anforderung zur Erfassung empfängt. In diesem Fall findet Datenaustausch S605 zwischen der mobilen Einheit 101 und der Erfassungseinheit 105 statt. Dieser Datenaustausch umfasst eine Authentifizierung 704, nach der auch die Kennung 705 der mobilen Einheit 101 an die Erfassungseinheit 105 übertragen wird. Optional kann die mobile Einheit 101 in Unterschritt 706 Informationen zur Abbuchung eines Betrages von dem in der mobilen Einheit 101 gespeicherten Guthaben umfassen. Ebenso können Informationen über zwischenzeitlich angefahrene Haltestellen zur Speicherung in Datenspeicher 206 empfangen werden (Unterschritt 707). Optional ist eine Rückmeldung 707 an die Erfassungseinheit 105 vorgesehen.

Die Raumüberwachung wird üblicherweise derart realisiert, dass jeweils nur eine sehr kurze Kommunikation in längeren Zeitabständen stattfindet. Zwischen zwei Haltestellen finden dann einige wenige solcher Kommunikationen zu jeder mobilen Einheit statt. Typischerweise wird ein Fahrgast dann als ausgestiegen angenommen, wenn zwischen zwei Haltestellen keine Kommunikation mehr stattfindet.

Die mobile Einheit 101 prüft in ihrer Steuerungsvorrichtung 201, wie lange der letzte Erfassungsvorgang zurückliegt. Diese Zeitmessung wird bei der Erfassung in S606 zurückgesetzt.

Schritt S607 prüft in regelmäßigen Abständen, ob das festgelegte Zeitintervall abgelaufen ist. Ist dies nicht der Fall, so prüft Steuerungsvorrichtung S201, ob über die zweite Datenübertragungsschnittstelle 203 oder ein Bedienelement 209 ein Ausbuchungsvorgang durch den Benutzer gestartet wurde. Wenn auch dies nicht der Fall ist, kehrt der Ablauf wieder zurück zu Schritt S604.

Für den Fall, dass die bisherige stationäre Einheit für einen definierten Zeitraum nicht mehr erreichbar ist, kann die mobile Einheit für einen anderen definierten Zeitraum nach anderen stationären Einheiten automatisch suchen. Dadurch kann ein Wagenwechsel oder anderweitiges Umsteigen des Fahrgastes automatisch festgestellt werden, ohne dass ein neuerlicher Check In Vorgang notwendig wäre.

Wenn der Zeitzähler abgelaufen ist oder ein Ausbuchungsvorgang durchgeführt wurde, wird in Schritt S609 die erste Datenübertragungsschnittstelle 202 ausgeschaltet, um keine weitere Energie aus dem Energiespeicher 205 zu entnehmen. Dies geschieht unter der Annahme, dass der Benutzer den Erfassungsbereich, zum Beispiel das Fahrzeug, verlassen hat. Die mobile Einheit 101 bleibt solange in einem stromsparenden Bereitschaftszustand, bis sie durch einen neuen Schritt S602 oder einen anderen Vorgang, wie zum Beispiel eine Fahrscheinkontrolle oder eine Aufladung des gespeicherten Guthabens, wieder aufgeweckt wird. In einer weiteren vorteilhaften Ausführungsform wird die Elektronik der mobilen Einheit 101 komplett abgeschaltet, so dass außer geringen Leckströmen keine Energie aus Energiespeicher 205 entnommen wird.

## Patentansprüche

1. Verfahren zur Ausführung in einem Informations-Erfassungssystem (100) mit mindestens einer mobilen Einheit (101) und mindestens einer Erfassungseinheit (105), die jeweils eine erste, kontaktlose Datenübertragungs-Schnittstelle (202, 302) umfassen, und mit mindestens einer Einbuchungseinheit (104) zur Erfassung von auf einen Benutzer bezogener Zeitinformation oder Weginformation, mit den Schritten:
a) Einbuchen der mobilen Einheit (101) in das Erfassungssystem (100) an der Einbuchungseinheit (104) durch den Benutzer zu Beginn eines Erfassungszeitraumes (S602);
b) Aktivierung der ersten Datenübertragungs-Schnittstelle (202) in der mobilen Einheit (101), ausgelöst durch Schritt a) (S603); und
c) mindestens ein Erfassungsschritt (S605) zur Erfassung der Anwesenheit der mobilen Einheit (101) durch die Erfassungseinheit (105), wobei Daten über die ersten Datenübertragungs-Schnittstellen (202, 302) über Funk übertragen werden.

2. Verfahren nach Anspruch 1, wobei Schritt a) eine Übertragung (702) einer Kennung der mobilen Einheit an die Einbuchungseinheit umfasst.

3. Verfahren nach Anspruch 1 oder 2, wobei Schritt a) eine Übertragung (703) von Zeitinformation oder Weginformation von der Einbuchungseinheit (104) an die mobile Einheit (101) umfasst.

4. Verfahren nach einem der Ansprüche 1-3, wobei Schritt a) eine Übertragung von Parametern, die Funk-Übertragung in Schritt c) betreffend, an die mobile Einheit (101) umfasst.

5. Verfahren nach einem der Ansprüche 1-4, wobei der Schritt a) eine Übertragung von Parametern, Funk-Übertragungen von weiteren Erfassungseinheiten (109, 110) betreffend, an die mobile Einheit (101) umfasst.

6. Verfahren nach einem der Ansprüche 1-5, wobei Schritt c) die Übertragung einer Kennung (705) der mobilen Einheit (101) an die Erfassungseinheit (105) umfasst.

7. Verfahren nach einem der Ansprüche 1-6, wobei Schritt c) die Übertragung (707) von Zeitinformation oder Weginformation von der Erfassungseinheit an die mobile Einheit umfasst.

8. Verfahren nach einem der Ansprüche 1-7, wobei
in der mobilen Einheit (101) Guthabeninformation gespeichert ist;
Schritt c) die Übertragung (706) von Kosteninformation von der Erfassungseinheit an die mobile Einheit umfasst; und
Schritt c) weiter eine Veränderung der gespeicherten Guthabeninformation in der mobilen Einheit in Abhängigkeit von der übertragenen Kosteninformation umfasst.

9. Verfahren nach einem der Ansprüche 1-8, das, nach Schritt c), weiterhin folgende Schritte umfasst:
d) Ausbuchen (709) der mobilen Einheit aus dem Erfassungssystem durch den Benutzer; und
e) Deaktivierung der ersten Datenübertragungs-Schnittstelle (S609) in der mobilen Einheit, ausgelöst durch Schritt d).

10. Verfahren nach einem der Ansprüche 1-9, das, nach Schritt c), weiterhin einen Schritt f) (609) der Deaktivierung der ersten Datenübertragungs-Schnittstelle in der mobilen Einheit umfasst, wobei Schritt f) ausgeführt wird, wenn über einen festgelegten Zeitraum keine Erfassung gemäß Schritt c) stattgefunden hat (S607).

11. Verfahren nach Anspruch 10, das, nach Schritt d) und vor Schritt e), einen Schritt der Suche nach Funksignalen von weiteren Erfassungseinheiten (109, 110) umfasst, wobei die Suche nach einem festgelegten Zeitraum beendet wird, wenn keine Funksignale von weiteren Erfassungseinheiten (109, 110) gefunden werden.

12. Verfahren nach einem der Ansprüche 1 bis 11, wobei Schritt a) die Übertragung von Daten (701, 702, 703) über eine zweite Datenübertragungs-Schnittstelle umfasst.

13. Verfahren nach Anspruch 12, wobei die Übertragung von Daten über die zweite Datenübertragungs-Schnittstelle kompatibel zu einem zweiten Erfassungssystem stattfindet, das Schritt c) nicht vorsieht.

14. Verfahren nach einem der vorangegangenen Ansprüche, wobei Schritt a) die Übertragung (710) von Konfigurationsdaten Schritt c) betreffend umfasst.

15. Verfahren nach einem der vorangegangenen Ansprüche, wobei Schritt a) die Anzeige von Daten, die auf die mobile Einheit (101) bezogen sind, umfasst.

16. Verfahren nach einem der vorangegangenen Ansprüche, wobei in einem weiteren Schritt die Ausführung des Schrittes a) in der Einbuchungseinheit (104) und/oder in der Erfassungseinheit (105) vorübergehend gesperrt werden kann.

17. Verfahren nach einem der vorangegangenen Ansprüche, wobei Schritt a) eine Speicherung von Informationen in der mobilen Einheit (101) umfasst, und diese Informationen in einem weiteren Schritt g) von der mobilen Einheit (101) an eine Kontrolleinheit (115) übertragen werden.

18. Verfahren nach Anspruch 17, bei dem in einem weiteren Schritt h) die in Schritt g) von der mobilen Einheit (101) an die Kontrolleinheit (115) übertragenen Daten von der Kontrolleinheit (115) an die Erfassungseinheit (105) übertragen werden.

19. Verfahren nach Anspruch 18, das weiterhin einen Schritt i) vorsieht, in dem die in Schritt h) von der Kontrolleinheit an die Erfassungseinheit übertragenen Daten mit im Erfassungssystem gespeicherten Daten verglichen werden.

20. Verfahren nach einem der vorangegangenen Ansprüche, zum Einsatz in einem Personenverkehrssystem, wobei
Schritt a) (S602) bei unmittelbar vor oder unmittelbar nach einem Fahrtantritt (S601) ausgeführt wird und Schritt c) (S605) während einer Fahrt mehrfach ausgeführt wird.

21. Verfahren nach Anspruch 20, wobei in Schritt a) Daten über einen Fahrtverlauf von der mobilen Einheit and die Erfassungseinheit übertragen oder an der Erfassungseinheit durch den Benutzer eingegeben werden, wobei das Verfahren einen weiteren Schritt k) umfasst, in dem diese Daten zur Steuerung des Betriebsablaufes des Nahverkehrssystems ausgewertet werden.

22. Verfahren nach einem der Ansprüche 20 oder 21, das weiterhin folgende Schritte umfasst:
l) Übertragung von Zeitinformation oder Weginformation von der Erfassungseinheit an eine Auswertungseinheit
m) statistische Auswertung von empfangenen Zeitinformationen und Weginformationen in der Auswertungseinheit
n) Planung von Betriebsabläufen des Nahverkehrssystems aufgrund von im Schritt m) erzielten Ergebnissen.

23. Verfahren nach einem der Ansprüche 20 bis 22, das weiterhin folgende Schritte umfasst:
o) Übertragung von Zeitinformation oder Weginformation zusammen mit einer Kennung, die die mobile Einheit eindeutig identifiziert, von der Erfassungseinheit an eine Auswertungseinheit
p) Berechnung eines Fahrpreises in der Auswertungseinheit.

24. Verfahren nach einem der Ansprüche 20 bis 23, das weiterhin folgende Schritte umfasst:
q) Übertragung von Zeitinformation oder Weginformation zusammen mit einer Kennung, die die mobile Einheit eindeutig identifiziert, von der Erfassungseinheit an eine Auswertungseinheit
r) Überprüfung einer Plausibilität der empfangenen Zeitinformation oder Weginformation in der Auswertungseinheit.

25. Verfahren nach einem der vorhergehenden Ansprüche, wobei die mobile Einheit (101) einen aufladbaren Energiespeicher (205) umfasst und Schritt a) (S602) ein Nachladen von Energie aus der Einbuchungseinheit (104) in den Energiespeicher umfasst.

26. Mobile Einheit (101) für ein Informations-Erfassungssystem (100) mit
einer ersten Datenübertragungs-Schnittstelle (202) zur Kommunikation mit einer Erfassungseinheit über Funk;
einer Aktivierungsvorrichtung (204) zur Aktivierung und Deaktivierung der ersten kontaktlosen Datenübertragungs-Schnittstelle (202);
einer zweiten Datenübertragungs-Schnittstelle (203) zur Kommunikation mit einer Einbuchungseinheit (104) über eine kurze Entfernung;
einem Datenspeicher (206) zur Speicherung einer Kennung, wobei die Kennung die mobile Einheit identifiziert; und
einer Steuerungsvorrichtung (201), wobei die Steuerungsvorrichtung derart ausgebildet ist, dass sie ein Einbuchen (S602) der mobilen Einheit (101) in das Erfassungssystem (100) durch den Benutzer über die zweite Datenübertragungs-Schnittstelle (202), eine Aktivierung (S603) der ersten Datenübertragungs-Schnittstelle (202) über die Aktivierungsvorrichtung (204), ausgelöst durch das Einbuchen, und eine Erfassung der Anwesenheit der mobilen Einheit (S605) durch die Erfassungseinheit (105), bei der Daten über die erste Datenübertragungs-Schnittstelle (202) übertragen werden, steuert.

27. Mobile Einheit (101) nach Anspruch 26, wobei der Datenspeicher (206) weiter zur Speicherung von Guthabeninformation ausgebildet ist.

28. Mobile Einheit (101) nach Anspruch 26 oder 27, wobei der Datenspeicher (206) weiter zur Speicherung von Zeitinformation oder Weginformation ausgebildet ist.

29. Mobile Einheit (101) nach einem der Ansprüche 26-28, bei der die zweite Datenübertragungs-Schnittstelle (203) für eine Kommunikation gemäß ISO14443 ausgebildet ist.

30. Mobile Einheit (101) nach einem der Ansprüche 26-29, bei der die erste Datenübertragungs-Schnittstelle (202) für eine Datenübertragungsrate von mindestens 1 Megabit pro Sekunde ausgebildet ist.

31. Mobile Einheit (101) nach einem der Ansprüche 26-30, die weiter eine Anzeigevorrichtung (208) umfasst.

32. Mobile Einheit (101) nach Anspruch 31, wobei die Steuerungsvorrichtung (201) derart ausgebildet ist, dass sie die Anzeigevorrichtung (208) in Abhängigkeit von einer korrekten Funktion der mobilen Einheit (101) steuert.

33. Mobile Einheit (101) nach Anspruch 31, wobei die Steuerungsvorrichtung (201) derart ausgebildet ist, dass sie die Anzeigevorrichtung (208) steuert, um Zusatzinformationen anzuzeigen, die die mobile Einheit (101) über die erste (202) oder zweite Datenübertragungs-Schnittstelle (203) empfängt.

34. Mobile Einheit nach einem der Ansprüche 26-33, die weiter umfasst:
einen aufladbaren Energiespeicher (205) zur Versorgung von mindestens der ersten Datenübertragungs-Schnittstelle (202) mit Energie; und
eine Ladevorrichtung (210), die ausgebildet ist, um zeitgleich mit einer Datenübertragung über die zweite Datenübertragungs-Schnittstelle (203) Energie zum Aufladen des Energiespeichers (205) zu empfangen.

35. Mobile Einheit nach einem der Ansprüche 26-34, die weiter einen Energiespeicher zur Versorgung von mindestens der Steuerungsvorrichtung (201) mit Energie umfasst, wobei die zweite Datenübertragungs-Schnittstelle so ausgebildet ist, dass sie bei leerem Energiespeicher die Steuerungsvorrichtung (201) mit Energie versorgt.

36. Mobile Einheit nach einem der Ansprüche 26-35, die weiter ein Bedienelement (209) umfasst, wobei die Steuerungsvorrichtung (201) derart ausgebildet ist, dass sie einen Zustand des Bedienelementes (201) abfragt und das Einbuchen der mobilen Einheit in das Erfassungssystem startet, wenn das Bedienelement (201) betätigt wird.

37. Informations-Erfassungssystem (100) zur Erfassung von auf einen Benutzer bezogener Zeitinformation oder Weginformation, umfassend:
mindestens eine mobile Einheit (101) nach einem der Ansprüche 26-36;
mindestens eine Erfassungseinheit (105) zur Erfassung der Anwesenheit von mobilen Einheiten (101-103), wobei die Erfassungseinheit derart ausgebildet ist, dass sie bei der Erfassung mit einer mobilen Einheit (101) Daten über die erste, kontaktlose Datenübertragungs-Schnittstelle (202) der mobilen Einheit (101) austauscht; und
mindestens eine Einbuchungseinheit (104) zum Einbuchen von mobilen Einheiten (101-103) in das Informations-Erfassungssystem, wobei die Einbuchungseinheit derart ausgebildet ist, dass sie beim Einbuchen einer mobilen Einheit (101) Daten über die zweite Datenübertragungs-Schnittstelle (203) der mobilen Einheit (201) austauscht.

38. lnformations-Erfassungssystem (100) nach Anspruch 37, wobei die Erfassungseinheit (105) eine Vielzahl von Antennen (306) umfasst.

39. Informations-Erfassungssystem (100) nach Anspruch 38, wobei die Erfassungseinheit (105) eine Antennensteuerungsvorrichtung (305) umfasst, zur Auswahl einer Antenne (306) aus der Vielzahl von Antennen, wobei die Antennensteuerungsvorrichtung (305) derart ausgebildet ist, um die Auswahl in Abhängigkeit von Übertragungsbedingungen zwischen einzelnen Antennen (306) und einer mobilen Einheit (101) vorzunehmen.

40. Informations-Erfassungssystem (100) nach einem der Ansprüche 37-39, wobei die Erfassungseinheit (105) mindestens zwei Datenübertragungs-Schnittstellen (302, 307) zur gleichzeitigen Erfassung von mindestens zwei mobilen Einheiten umfasst.

41. Informations-Erfassungssystem (100) nach einem der Ansprüche 37-40, wobei die Einbuchungseinheit (104) über eine Anzeigevorrichtung (405) zur Anzeige von Information während eines Einbuchungsvorgangs umfasst.

42. Informations-Erfassungssystem nach einem der Ansprüche 37-41, die weiterhin eine Kontrolleinheit (115) umfasst, mit
einer Datenübertragungs-Schnittstelle (502) zur Kommunikation mit der zweiten Datenübertragungs-Schnittstelle (203) einer mobilen Einheit (101);
einer Anzeigevorrichtung (503); und
einer Steuerungsvorrichtung (501), die die kontaktlose Datenübertragungs-Schnittstelle (502) steuert, um Informationen über einen Zustand der mobilen Einheit (101) zu empfangen, und die die Anzeigevorrichtung (503) in Abhängigkeit von den empfangenen Informationen steuert.
